# EUROPÄISCHE PATENTSCHRIFT

(11) **EP 2 743 470 B1**
(45) Veröffentlichungstag und Bekanntmachung des Hinweises auf die Patenterteilung: **11.11.2020**
(21) Anmeldenummer: 13004451.4
(22) Anmeldetag: 12.09.2013
(51) Int. Cl.: F01N 3/025, F01N 3/30, F02D 41/08, F02D 41/12, F02D 41/02, F01N 3/32, F02D 41/00

(54) **VERFAHREN UND VORRICHTUNG ZUR ANHEBUNG DER ABGASTEMPERATUR IM ABGASTRAKT EINER TURBOAUFGELADENEN BRENNKRAFTMASCHINE**
Method and apparatus for raising the exhaust gas temperature in the exhaust pipe of a turbocharged internal combustion engine
Procédé et dispositif d'élévation de la température des gaz de combustion dans la ligne d'échappement d'un moteur à combustion interne turbochargé

(30) Priorität: 12.12.2012 DE 102012024260
(43) Veröffentlichungstag der Anmeldung: 18.06.2014
(73) Patentinhaber: MAN Truck & Bus SE, 80995 München (DE)
(72) Erfinder: Döring, Andreas, 82008 München (DE)
(74) Vertreter: v. Bezold & Partner Patentanwälte - PartG mbB

(56) Entgegenhaltungen:
- EP-A1- 0 306 630
- WO-A1-2012/015505
- DE-A1-102008 032 604
- JP-A- S6 079 114
- US-A1- 2010 011 747

## Beschreibung

Die vorliegende Erfindung betrifft ein Verfahren zur Anhebung der Abgastemperatur im Abgastrakt einer turboaufgeladenen Brennkraftmaschine, insbesondere für Kraftfahrzeuge, gemäß dem Oberbegriff des Patentanspruchs 1, sowie eine Vorrichtung und eine Brennkraftmaschine zur Durchführung eines derartigen Verfahrens, nach dem Oberbegriff des Anspruchs 11.

Zur Minimierung der kohlenstoffhaltigen Feinstoffpartikel werden in Fahrzeugen üblicherweise sogenannte Partikelabscheider oder Partikelfilter eingesetzt. Eine typische Partikelabscheider-Anordnung in Fahrzeugen ist beispielsweise aus EP 10 727 65 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. Infolge dieses Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe des ebenfalls enthaltenen Restsauerstoffs (O₂) zu Stickstoffdioxid (NO₂), und zwar gemäß folgender Gleichung:

2 NO + O₂ <-> 2 NO₂

Dabei ist zu beachten, dass das Gleichgewicht der obigen Reaktion bei hohen Temperaturen auf der Seite von NO liegt. Dies hat wiederum zur Folge, dass die erzielbaren NO₂-Anteile bei hohen Temperaturen aufgrund dieser thermodynamischen Begrenzung limitiert sind.

Das NO₂ setzt sich wiederum im Partikelfilter mit den kohlenstoffhaltigen Feinstpartikeln zu CO, CO₂, N₂ und NO um. Mit Hilfe des starken Oxidationsmittels NO₂ erfolgt somit eine kontinuierliche Entfernung der angelagerten Feinstpartikeln, so dass Regenerationszyklen, wie sie aufwändig bei anderen Anordnungen durchgeführt werden müssen, entfallen können. Man spricht in diesem Zusammenhang von einer passiven Regeneration, gemäß nachstehender Gleichungen:

2 NO₂ + C -> 2 NO + CO₂

NO₂ + C -> NO + CO

2 C + 2 NO₂ -> N₂ + 2 CO₂

Neben NO₂ wird an den platinhaltigen NO-Oxidationskatalysatoren auch SO₃ aus im Kraftstoff- und/oder Motorenöl enthaltenem Schwefel gebildet. Das SO₃ und NO₂ kondensieren an kalten Stellen im Abgastrakt zu hochkorrosiver Schwefel- bzw. Salpetsäure, so dass die Abgasanlage bis zu den Partikelfiltern in Edelstahl ausgeführt werden muss, um eine Korrosion zu vermeiden.

Gelingt keine vollständige Oxidation des im Partikelfilter eingelagerten Kohlenstoffs mit Hilfe von NO₂, so steigen der Kohlenstoffanteil und damit der Abgasgegendruck stetig an. Um dies zu vermeiden, werden aktuell die Partikelfilter vermehrt mit einer katalytischen Beschichtung zur Oxidation von NO versehen (EP 03 418 32 A2). Dabei handelt es sich konkret um platinhaltige Katalysatoren. Der Nachteil dieses Verfahrens besteht jedoch darin, dass das am Partikelfilter gebildete NO₂ nur zur Oxidation von Partikeln dienen kann, die stromab der katalytisch aktiven Schicht zur NO-Oxidation abgeschieden wurden, das heißt somit innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der partikelfilterseitige NO-Oxidationskatalysator stromab des Filterkuchens, so dass die dort abgeschiedenen Rußpartikel nicht mit Hilfe von NO₂ aus dem, auf dem Partikelfilter aufgebrachten, NO-Oxidationskatalysator oxidiert werden können. Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters besteht darin, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß- und Motorölasche einzulagern. Werden keramische Filtersubstrate eingesetzt, wird dies durch eine geringe Zelldichte von 50 cpsi bis 200 cpsi realisiert. Demgegenüber werden reine Katalysatoren üblicherweise mit Zelldichten von 400 cpsi bis 900 cpsi ausgeführt. Durch die Anhebung von 50 cpsi auf 900 cpsi ergibt sich eine Erhöhung der geometrischen Oberfläche von 1 m²/l auf 4 m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, in dem der Eintrittsbereich des _Partikelfilters als NO-Oxidationskatalysator ausgeführt ist, wie dies beispielsweise bei der DE 103 270 30 A1 beschrieben ist.

Obwohl durch diese Maßnahmen eine Rußoxidation wohl noch bis zu Temperaturen von 250°C möglich ist, gibt es dennoch Anwendungsfälle, in denen selbst diese Abgastemperaturen nicht erreicht werden und somit keine sichere Funktion des Partikelfilters sichergestellt werden kann. Dies tritt üblicherweise bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auf. Daher wird speziell in solchen Fällen eine zweite Möglichkeit der Partikelfilterregeneration angewendet, in dem die Abgastemperatur aktiv angehoben wird. Dies geschieht üblicherweise durch die Zugabe von Kohlenwasserstoffen (HC) stromauf von Katalysatoren, insbesondere HC-Oxidationskatalysatoren. Durch diese exotherme Reaktion bzw. Oxidation der Kohlenwasserstoffe an den Katalysatoren wird ein deutlicher Temperaturanstieg erreicht.

Gelingt dadurch eine Temperaturanhebung auf über 600°C, kommt es zu einer Oxidation bzw. zum Abbrennen des im Partikelfilter abgeschiedenen Kohlenstoffs mit Hilfe von Sauerstoff, gemäß nachstehender Gleichung:

C + O₂ -> CO₂

Allerdings besteht bei dieser sogenannten aktiven Filterregeneration die Gefahr, dass es durch das exotherme Abbrennen des kohlenstoffhaltigen Rußes zu einem starken Temperaturanstieg auf bis zu 1000°C und damit meist zur Schädigung des Partikelfilters und/oder nachgeschalteter Katalysatoren kommt. Da zudem die Temperaturerhöhung für mehrere Minuten aufrecht erhalten werden muss, um eine quantitative Oxidation der Rußpartikel sicherzustellen, ist der Bedarf an Kohlenwasserstoffen nicht unerheblich und verschlechtert den Wirkungsgrad der Brennkraftmaschine, da üblicherweise der Kraftstoff als Kohlenwasserstoffquelle verwendet wird.

Eine einfache Kombination dieser beiden Regenerationsarten, indem Kohlenwasserstoffe vor NO-Oxidationskatalysatoren zugegeben werden, ist nicht zielführend:
Durch die Temperaturanhebung auf über 600°C wird an den NO-Oxidationskatalysatoren aufgrund der thermodynamischen Begrenzung kaum mehr NO₂ gebildet. Zudem wird die Oxidation von NO durch die hohen Mengen an Kohlenwasserstoffen behindert, wodurch es zur starken Verminderung der NO₂-Bildung kommt. Dies führt dazu, dass die Partikel allein mit Hilfe von Sauerstoff oxidiert werden müssen, da in dieser Phase kein NO₂ zur Verfügung steht, was die Regenerationszeit verlängert.

Gleichzeitig sind die NO-Oxidationskatalysatoren gegenüber thermischer Schädigung weit weniger stabil, als Katalysatoren zur Kohlenwasserstoffoxidation, da es bei Temperaturen über 550°C zu einer irreversiblen Sinterung der Aktivkomponenten und damit einem Rückgang der NO-Oxidationsaktivität kommt.

Neben diesen katalytischen Brennern können auch konventionelle Brenner mit offener Flamme oder Porenbrenner eingesetzt werden, wobei hier allerdings der Nachteil besteht, dass zu deren Betrieb eine externe Luftversorgung notwendig ist, da diese, anders als ein katalytischer Brenner, nur bei ausreichend hohem Luftüberschuss betrieben werden können. Diese Luftversorgung wird üblicherweise mit Hilfe von Kompressoren oder Gebläsen sichergestellt.

Ein Verfahren der gattungsgemäßen Art beschreibt beispielsweise die EP 1 253 300 A1, bei dem ein mit Kraftstoff und Luft bedarfsweise beaufschlagbarer Brenner die Abgastemperatur stromauf einer im Abgastrakt vorgesehenen Abgasreinigungseinrichtung zum Beispiel mit einem Partikelfilter und/oder Katalysatoren auf einen Wert anhebt, der oberhalb deren Anspringtemperatur liegt. Der Brenner wird insbesondere dann aktiviert, wenn Betriebszustände wie Leerlauf oder niedrige Last der Brennkraftmaschine vorliegen, bei denen die Abgastemperatur für eine wirksame Konvertierung unerwünschter Abgasbestandteile zu niedrig liegt. Kritisch ist dies zum Beispiel bei Fahrzeugen, die häufig Leerlaufbetrieb oder extremen Kurzstreckenbetrieb unterliegen.

Die dem Brenner zugeführte Luft kann nach dem bekannten Verfahren mittels eines Gebläses oder aus der die Brennkraftmaschine versorgenden Verbrennungsluftleitung bzw. bei einer turboaufgeladenen Brennkraftmaschine der Ladedruckleitung entnommen werden. Dabei ist jedoch sicherzustellen, dass der Druck der zum Brenner geführten Luft höher ist als der Abgasdruck in der Abgasleitung; dies kann aber zumindest bei einer Versorgung über die Ladedruckleitung bei bestimmten Betriebszuständen der Brennkraftmaschine nicht der Fall sein.

DE 10 2008 032 604 A1 lehrt ein Verfahren zum Einstellen eines Zustands eines Abgasstroms einer Brennkraftmaschine eines Kraftfahrzeugs mit einer Druckluftquelle zum Erzeugen eines Luftmassenstroms zum Versorgen der Brennkraftmaschine mit Verbrennungsluft, mittels eines an einer Einmündungsstelle den Abgasstrom mündenden Brenners. Der Brenner kann dabei mit Frischluft versorgt werden, die stromab eines Kompressors eines Turboladers und stromauf eines Ladeluftkühlers abgezweigt wird. EP 0 306 630 offenbart eine ähnliche Lehre.

Aufgabe der Erfindung ist es, ein Verfahren der gattungsgemäßen Art vorzuschlagen, das mit baulich einfachen Mitteln in allen Betriebszuständen der Brennkraftmaschine eine zuverlässige Regenerierung der Abgasreinigungseinrichtung bzw. eine wirksame Konvertierung unerwünschter Abgasbestandteile ermöglicht. Ferner soll eine vorteilhafte Vorrichtung und Brennkraftmaschine zur Durchführung des Verfahrens angegeben werden.

Diese Aufgabe wird mit den Merkmalen der unabhängigen Patentansprüche gelöst. Vorteilhafte Weiterbildungen und Ausgestaltungen sind Gegenstand der jeweiligen Unteransprüche.

Erfindungsgemäß wird ein Verfahren zur Anhebung der Abgastemperatur im Abgastrakt einer turboaufgeladenen Brennkraftmaschine, insbesondere für Kraftfahrzeuge, mit nachgeschalteter Abgasreinigungseinrichtung vorgeschlagen, bei dem eine bei Bedarf zuschaltbare Heizeinrichtung vorgesehen ist, die in denjenigen Phasen, in denen der Ladedruck so hoch ist, dass eine definierte und/oder ausreichende Menge an Ladeluft in die Heizeinrichtung überströmen kann, aus der Ladedruckleitung der Brennkraftmaschine mit Luft versorgt wird, wobei die in der Heizeinrichtung erhitzte Luft stromauf der Abgasreinigungseinrichtung in den Abgastrakt eingeleitet wird. Erfindungsgemäß wird vorgeschlagen, dass der Heizeinrichtung in den anderen Betriebszuständen bzw. wenigstens in den Betriebszuständen der Brennkraftmaschine, in denen der Ladedruck nicht so hoch ist, dass eine definierte und/oder ausreichende Menge an Ladeluft in die Heizeinrichtung überströmen kann, ein definierter Abgasstrom aus dem Abgastrakt der Brennkraftmaschine zugeführt wird. Besonders bevorzugt kann hierbei ein Abgasstrom von einer Abgasleitung stromauf der Abgasturbine abgezweigt werden.

Erfindungsgemäß wird somit vorgeschlagen, dass die Heizeinrichtung bei Betriebszuständen der Brennkraftmaschine mit definiert geringerem Ladedruck an eine Abgasleitung der Brennkraftmaschine, vorzugsweise stromauf der Abgasturbine, angeschlossen wird, um auch bei Betriebszuständen mit nicht ausreichendem Ladedruck jederzeit eine Luftzuführung zur Heizeinrichtung zu ermöglichen. Ein separates Gebläse ist hierfür nicht erforderlich.

Insbesondere bei mit Luftüberschuss betriebenen Brennkraftmaschinen mit Direkteinspritzung (Diesel- oder auch Ottomotoren) ist zum Beispiel in den Betriebszuständen Leerlauf, Teillast, etc. genügend Sauerstoff (Lambda > 1) enthalten, um die erwünschte Temperaturanhebung im Abgas zu erzielen und zum Beispiel eine optimale Regeneration eines Partikelfilters durchführen zu können bzw. eine verbesserte Konvertierung unerwünschter Abgasbestandteile aufrechtzuerhalten.

In vorteilhafter Weiterbildung kann bei einer mehrzylindrischen Brennkraftmaschine wenigstens ein Zylinder bzw. dessen Einzelleitung mit der Heizeinrichtung über ein Stellelement verbunden werden. Das Stellelement kann bevorzugt ein einfaches Absperrventil, zum Beispiel eine Drosselklappe, sein, das bei Bedarf die Abgasleitung an die Heizeinrichtung anschließt. Gleiches gilt gegebenenfalls für die Luft-Zuführleitung, die an die Ladedruckleitung der Brennkraftmaschine angeschlossen ist.

In definierten Betriebszuständen der Brennkraftmaschine kann es ferner vorteilhaft sein, wenn die Kraftstoffzufuhr zu dem wenigstens einen Zylinder der Brennkraftmaschine bei aktiviertem Stellelement teilweise oder gänzlich unterbrochen wird. Dies ist hinsichtlich der Leistung der Brennkraftmaschine unerheblich, da in den Betriebszuständen wie Leerlauf oder Teillast ohnehin nicht die reguläre Antriebsleistung benötigt wird; die Sauerstoffzufuhr zur Heizeinrichtung kann dadurch gezielt beeinflusst werden.

Als Heizeinrichtung kann bevorzugt in an sich bekannter Weise ein mit Kraftstoff beschickter Brenner verwendet werden, zum Beispiel ein Brenner mit offener Flamme, ein Porenbrenner oder ein katalytischer Brenner, dessen Betriebsmittelzufuhr, insbesondere Kraftstoffzufuhr, abhängig von Betriebsparametern der Brennkraftmaschine und/oder einer Lambdasonde stromab des Brenners und/oder einer Lambdasonde stromab der Brennkraftmaschine und/oder eines Luftmassenmessers stromauf des Brenners geregelt wird. Die Heizeinrichtung könnte gegebenenfalls aber auch elektrisch betrieben sein und die zugeführte und in den Abgastrakt eingeleitete Luft aufheizen.

Erfindungsgemäß wird in einer Abgas-Sammelleitung mehrerer Zylinder der Brennkraftmaschine ein den Durchfluss der Abgasleitung des wenigstens einem Zylinder steuerndes Drosselventil eingesetzt. Das Drosselventil (zum Beispiel eine Drosselklappe) kann mehr oder weniger die Abströmung des wenigstens einen Zylinders bis hin zur vollkommenen Absperrung steuern, so dass der Zylinder quasi als Kompressor druckgesteuert Abgas direkt zur Heizeinrichtung fördert. Damit kann in baulich einfacher Weise eine luftmassen-, durchfluss- oder druckgesteuerte Beaufschlagung der Heizeinrichtung erfolgen.

Des Weiteren kann auch in der Verbindungsleitung zwischen der Ladedruckleitung und der Heizeinrichtung ein Regelventil, insbesondere ein Drosselventil vorgesehen werden, um einen zusätzlichen Regelparameter zur Beaufschlagung der Heizeinrichtung mit Luft zu schaffen.

Als Regelgrößen für die Ansteuerung der Stellelemente und Drosselventile zur Luftversorgung der Heizeinrichtung bzw. zur Steuerung der Konvertierungsraten der Abgasreinigungseinrichtung können zumindest der Ladedruck und/oder der Abgasdruck und/oder ein Differenzdruck der beiden und/oder der Lambdawert des Abgases stromab der Brennräume der Brennkraftmaschine verwendet werden. Ferner können die Motordrehzahl und/oder die Kraftstoffeinspritzmenge und/oder die Luftmassenströme durch den Motor und/oder der Heizeinrichtung erfasst und zur Steuerung der Luftzufuhr zur Heizeinrichtung regelungstechnisch berücksichtigt werden.

Dazu kann es des Weiteren vorteilhaft sein, wenn der zumindest eine Abgasturbolader der Brennkraftmaschine eine variable Turbinengeometrie aufweist und dessen Verstellung als Regelgröße zur Steuerung der Luftzufuhr zur Heizeinrichtung verwertet wird. Da die Stellung des Regelgliedes der Abgasturbine deren Förderleistung und den Druck vor Abgasturbine signalisiert, kann dies vorteilhaft zur Steuerung der Luftzufuhr zur Heizeinrichtung als Regelparameter verwendet werden.

Gemäß Anspruch 8 wird eine Vorrichtung zur Durchführung eines Verfahrens zur Anhebung der Abgastemperatur im Abgastrakt einer turbo- bzw. abgasaufgeladenen Brennkraftmaschine, insbesondere für Kraftfahrzeuge, vorzugsweise nach dem Otto- oder Dieselprinzip mit Direkteinspritzung des Kraftstoffs in die Brennräume, vorgeschlagen, die zumindest einem Abgasturbolader aufweist, dessen Abgasturbine an den Abgastrakt der Brennkraftmaschine stromauf einer Abgasreinigungseinrichtung, insbesondere eines Oxidationskatalysators und/oder eines Dieselpartikelfilters und/oder eines Selektivkatalysators, angeschlossen ist. Ein Verdichter des Abgasturboladers fördert Ladeluft über eine Ladedruckleitung zu den Brennräumen. Ferner ist stromauf der Abgasreinigungseinrichtung eine Heizeinrichtung zum bedarfsweisen Anheben der Abgastemperatur durch Luftzufuhr aus der Ladedruckleitung vorgesehen, die zusätzlich über ein steuerbares Stellelement und eine Abgasleitung an den Abgastrakt angeschlossen ist, insbesondere an den Abgastrakt stromauf der Abgasturbine angeschlossen ist.

Dabei kann in der Abgasleitung zur Heizeinrichtung und gegebenenfalls in der Zuführleitung für Ladeluft zur Heizeinrichtung ein den Massendurchsatz steuerndes Drosselventil vorgesehen sein, mittels dem in baulich und steuerungstechnisch besonders einfacher Weise die Luftzufuhr zur Heizeinrichtung einstellbar ist.

Des Weiteren kann das abgasseitige Drosselventil in einer Abgas-Sammelleitung stromab der Einzelleitung des wenigstens einen Zylinders der Brennkraftmaschine angeordnet sein und somit gezielt den Abgasdurchsatz bzw. den Abgasmassenstrom in beliebiger Quantität steuern. Der zumindest eine Abgasturbolader kann eine Abgasturbine mit variabler Turbinengeometrie aufweisen.

Schließlich können die Stellelemente und/oder Drosselventile an ein elektronisches Motorsteuergerät angeschlossen sein, mittels dem nach Maßgabe motorspezifischer Parameter (Motordrehzahl, Temperaturen, Ladedruck, etc.) und gegebenenfalls fahrspezifischer Parameter (zum Beispiel Lastzustand, Leerlaufbetrieb, Schubbetrieb, etc.) die Stellelemente und/oder Drosselventile gesteuert sind. Das Motorsteuergerät kann bevorzugt ein im Kraftfahrzeug bereits vorhandenes Motorsteuergerät sein, das aufgrund der bereits vorhandenen Steuerparameter zum Beispiel zur Kraftstoffzumessung lediglich entsprechend zu modifizieren ist.

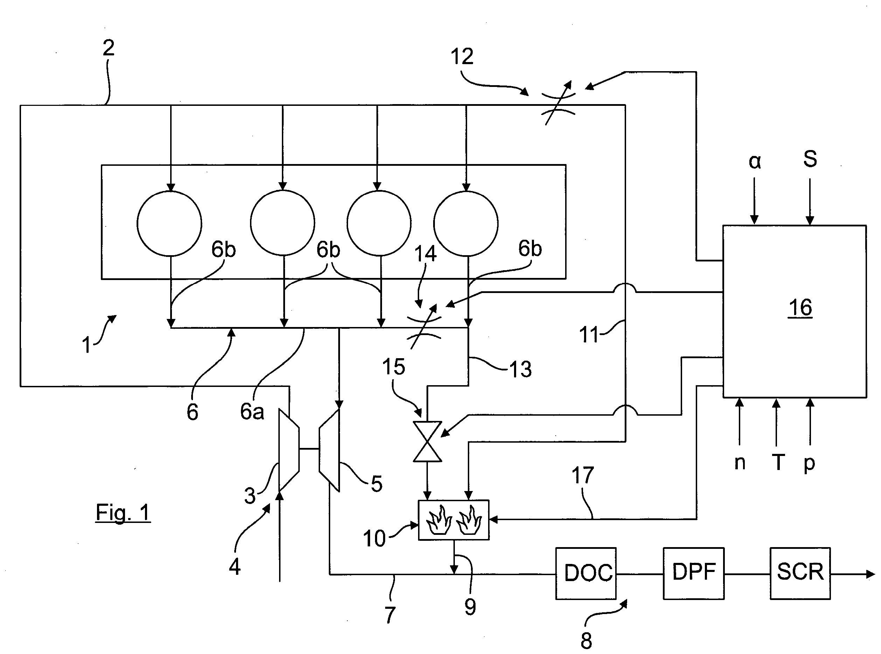

Ein Ausführungsbeispiel der Erfindung ist im Folgenden anhand der beigefügten Figur näher erläutert. Die Figur zeigt eine mehrzylindrische Brennkraftmaschine mit einem Abgasturbolader, einer Ladedruckleitung, einem Abgastrakt mit einer Abgasreinigungseinrichtung und einem Brenner zum Anheben der Abgastemperatur stromauf der Abgasreinigungseinrichtung.

Konkret ist in der einzigen Figur eine abgasturboaufgeladene Vierzylinder-Brennkraftmaschine 1 für ein Kraftfahrzeug oder Nutzfahrzeug gezeigt, die zum Beispiel eine Dieselbrennkraftmaschine sein kann und die soweit nicht anders beschrieben, bekannter Bauart ist.

Die Brennkraftmaschine 1 wird über eine Ladedruckleitung 2 mit Verbrennungsluft versorgt, wobei die Ladedruckleitung 2 an einen Verdichter 3 eines Abgasturboladers 4 angeschlossen ist. Der Verdichter 3 saugt in bekannter Weise über einen Luftfilter Umgebungsluft an und drückt diese in die nicht dargestellten Brennräume der Brennkraftmaschine 1.

Angetrieben ist der Verdichter 3 mittels einer Abgasturbine 5, die in bekannter Weise ausgebildet ist und zum Beispiel mit einer variablen Turbinengeometrie (einem verstellbaren Leitgitter) versehen ist und die in den Abgastrakt der Brennkraftmaschine 1 eingeschaltet ist.

Der Abgastrakt setzt sich aus einem auslassseitig an die Brennräume der Brennkraftmaschine angeschlossenem Abgaskrümmer 6 und soweit dargestellt einer von der Abgasturbine 5 abgehenden Abgasleitung 7 zusammen.

In die Abgasleitung 7 ist eine Abgasreinigungseinrichtung 8 im Ausführungsbeispiel mit in Abgasströmungsrichtung einem Oxidationskatalysator DOC, einem Dieselpartikelfilter DPF und einem SCR- Katalysator zur NOx- Verminderung integriert. Der weiter führende Abgastrakt ist nicht dargestellt.

Stromauf der Abgasreinigungseinrichtung 8 ist an die Abgasleitung 7 eine Heizleitung 9 angeschlossen, über die von einer Heizeinrichtung bzw. hier einem Brenner 10 erhitzte Luft zum definierten Anheben der Abgastemperatur der Brennkraftmaschine 1 zuführbar ist.

In den Brenner 10 wird zum Beispiel Kraftstoff, abhängig von der zugeführten Luftmasse eingespritzt. Zur Zuführung der Luft ist der Brenner 10 über eine Zuführleitung 11 an die Ladedruckleitung 2 angeschlossen. Ferner ist in der Zuführleitung 11 ein steuerbares Drosselventil 12 (zum Beispiel eine Drosselklappe) vorgesehen, mittels dem die Durchflussmenge steuerbar ist.

An den Brenner 10 ist des Weiteren eine Abgasleitung 13 angeschlossen, die von einer Sammelleitung 6a des Abgaskrümmers 6 abzweigt. In der Sammelleitung 6a ist zum Beispiel zwischen den beiden letzten, von den Zylindern der Brennkraftmaschine 1 abgehenden Einzelleitungen 6b ein Drosselventil 14 (zum Beispiel eine Drosselklappe) eingesetzt, mittels dem der letzte Zylinder der Brennkraftmaschine 1 bzw. dessen Abgas mehr oder weniger vom übrigen, zur Abgasturbine 5 führenden Abgastrakt abtrennbar ist.

Ferner ist in der Abgasleitung 13 zum Brenner 10 ein Stellelement 15 vorgesehen, mit dem die Abgasleitung absperrbar ist.

Im regulären Betrieb der Brennkraftmaschine 1 mit höherer Leistungsabgabe liegt die Abgastemperatur stromauf der Abgasreinigungseinrichtung 8 oberhalb deren Anspringtemperatur (zum Beispiel 450°C) und ist damit ausreichend hoch, um die gewünschte Konvertierung der Abgasbestandteile zu bewirken. Das Drosselventil 12 in der Luftzuführleitung 11 und das Stellelement 15 in der Abgasleitung 13 sind geschlossen und die Kraftstoffzufuhr zum Brenner 10 ist unterbrochen.

Soll bei ausreichend hohem Ladedruck in der Ladedruckleitung 2 (zum Beispiel bei nicht betriebswarmer Brennkraftmaschine 1) die Abgastemperatur angehoben werden, so wird das Drosselventil 12 aufgesteuert, im Brenner 10 je nach zugeführter Luftmassenmenge Kraftstoff eingespritzt und die dadurch erhitzte Luft über die Heizleitung 9 stromauf der Abgasreinigungseinrichtung 8 in die Abgasleitung 7 eingeleitet. Die Zuführung der Luft aus der Ladedruckleitung 2 kann solange gesteuert werden, wie der Ladedruck höher als der Abgasdruck in der Abgasleitung 7 ist.

Ist jedoch im Schwachlastbereich, zum Beispiel im Leerlauf, in der niedrigeren Teillast oder im Schubbetrieb der Brennkraftmaschine 1, der Ladedruck in der Ladedruckleitung 2 geringer als der Abgasdruck in der Abgasleitung 7, so kann über die Zufuhrleitung 11 keine Luft zum Brenner 10 zugeführt werden, um die Abgastemperatur auf dem erforderlichen Niveau zu halten oder anzuheben.

In diesem Fall wird bei geschlossenem Drosselventil 12 in der Zuführleitung 11 das Absperrventil 15 in der Abgasleitung 13 geöffnet und ferner das Drosselventil 14 so angesteuert, dass eine Abgasmenge des letzten (auf der Zeichnung rechten) Zylinders der Brennkraftmaschine 1 zum Brenner 10 geführt wird, in diesem mit Kraftstoff verbrannt und das so erhitzte Gas in die Abgasleitung 7 eingeleitet wird.

Des Weiteren kann über die Kraftstoffeinspritzanlage (nicht dargestellt) der Brennkraftmaschine 1 in diesen Betriebszuständen die Kraftstoffzufuhr zu diesem letzten Zylinder vermindert oder gänzlich unterbunden werden, um somit gezielt den Sauerstoffgehalt (den Lambdawert) des Abgases zu beeinflussen bzw. gegebenenfalls auch Reinluft dem Brenner 10 zuzuführen (der Zylinder arbeitet dann als Kompressor).

Die Steuerung des Stellelements 15 in der Abgasleitung 13 und der Drosselventile 12, 14 in der Zuführleitung 11 und der Sammelleitung 6a des Abgaskrümmers 6 kann über ein elektronisches Motorsteuergerät 16 (nur angedeutet) erfolgen, das nach Maßgabe motorspezifischer Parameter, wie zum Beispiel Drehzahl n, Temperaturen T (des Motors, des Abgases, etc), der Druckverhältnisse p in der Ladedruckleitung 2 und im Abgastrakt 6, 7, und/oder nach Maßgabe fahrspezifischer Parameter, wie zum Beispiel Lastanforderung α über ein Gaspedal oder Schubbetrieb S etc., und/oder nach Maßgabe abgasnachbehandlungsspezifischer Parameter, wie zum Beispiel Katalysatortemperatur, NOx- Menge, Abgasgegendruck etc., deren Ansteuerung (in Pfeilen angedeutet) bewirkt.

Das entsprechend modifizierte Steuergerät 16 steuert im Übrigen in bekannter Weise die Kraftstoffzumessung zur Brennkraftmaschine 1 und zum Brenner 10, wobei in den Zuführleitungen stromauf des Verdichters 3 und in der Zuführleitung 11 bzw. der Abgasleitung 13 entsprechende Luftmassenmesser und/oder in der Heizleitung 9 eine zusätzliche Lambdasonde (nicht dargestellt) vorgesehen sein können.

### Bezugszeichenliste

- 1: Brennkraftmaschine
- 2: Ladedruckleitung
- 3: Verdichter
- 4: Abgasturbolader
- 5: Abgasturbine
- 6: Abgaskrümmer
- 6a: Sammelleitung
- 6b: Einzelleitungen
- 7: Abgasleitung
- 8: Abgasreinigungseinrichtung
- 9: Heizleitung
- 10: Brenner
- 11: Zuführleitung
- 12: Drosselventil
- 13: Abgasleitung
- 14: Drosselventil
- 15: Stellelement
- 16: Motorsteuergerät
- DOC: Oxidationskatalysator
- DPF: Dieselpartikelfilter
- SCR: SCR-Katalysator

## Patentansprüche

1. Verfahren zur Anhebung der Abgastemperatur im Abgastrakt einer turboaufgeladenen mehrzylindrigen Brennkraftmaschine (1) mit nachgeschalteter Abgasreinigungseinrichtung (8), mit einer bei Bedarf zuschaltbaren Heizeinrichtung (10), die in denjenigen Phasen, in denen der Ladedruck so hoch ist, dass eine definierte und/oder ausreichende Menge an Ladeluft in die Heizeinrichtung (10) überströmen kann, aus einer Ladedruckleitung (2) der Brennkraftmaschine (1) mit Luft versorgt wird, wobei die Heizeinrichtung (10) zur Zuführung der Luft über eine Zuführleitung (11) an die Ladedruckleitung (2) angeschlossen ist und in der Zuführleitung (11) ein erstes Drosselventil (12) vorgesehen ist, wobei die in der Heizeinrichtung (10) erhitzte Luft stromauf der Abgasreinigungseinrichtung (8) in den Abgastrakt eingeleitet wird, wobei der Heizeinrichtung (10) wenigstens in den Betriebszuständen der Brennkraftmaschine, in denen der Ladedruck nicht so hoch ist, dass eine definierte und/oder ausreichende Menge an Ladeluft in die Heizeinrichtung (10) überströmen kann, ein definierter Abgasstrom aus dem Abgastrakt der Brennkraftmaschine (1) zugeführt wird, wobei der Abgasstrom von einer Abgasleitung (13), in der ein Absperrventil (15) vorgesehen ist, stromauf der Abgasturbine (5) abgezweigt wird, **dadurch gekennzeichnet, dass** bei geschlossenem ersten Drosselventil (12) in der Zuführleitung (11) das Absperrventil (15) in der Abgasleitung (13) geöffnet und ferner ein zweites Drosselventil (14), das in einer Sammelleitung (6a) eines Abgaskrümmers (6) vorgesehen ist, so angesteuert wird, dass eine Abgasmenge von lediglich einem Zylinder der Brennkraftmaschine (1) zur Heizeinrichtung (10) geführt wird.

2. Verfahren nach Anspruch 1, **dadurch gekennzeichnet, dass** die Betriebszustände der Brennkraftmaschine (1), in denen der Ladedruck nicht so hoch ist, dass eine definierte und/oder ausreichende Menge an Ladeluft in die Heizeinrichtung (10) überströmen kann, eine Schwachlast- und/oder Leerlauf- und/oder Schubphase der Brennkraftmaschine (1) ist.

3. Verfahren nach Anspruch 1 oder 2, **dadurch gekennzeichnet, dass** die Kraftstoffzufuhr zu dem Zylinder der Brennkraftmaschine (1) bei aktiviertem Stellelement (15) teilweise oder gänzlich unterbrochen wird.

4. Verfahren nach einem der vorhergehenden Ansprüche, **dadurch gekennzeichnet, dass** als Heizeinrichtung ein mit Kraftstoff beschickter Brenner (10) verwendet wird, dessen Kraftstoffzufuhr abhängig von Betriebsparametern der Brennkraftmaschine und/oder einer Lambdasonde stromab des Brenners (10) und/oder eines Luftmassenmessers stromauf des Brenners (10) und/oder den Betriebsparametern des Abgasnachbehandlungssystems geregelt wird.

5. Verfahren nach einem der vorhergehenden Ansprüche, **dadurch gekennzeichnet, dass** als Regelgröße für die Ansteuerung von wenigstens einem Stellelement (15) und/oder von wenigstens einem Drosselventil (12, 14) zur Luftversorgung der Heizeinrichtung (10) zumindest der Ladedruck und/oder der Abgasdruck und/oder ein Differenzdruck der beiden und/oder der Lambdawert des Abgases stromab der Brennräume und/oder der Lambdawert stromab der Heizeinrichtung (10) der Brennkraftmaschine (1) verwendet wird.

6. Verfahren nach Anspruch 5, **dadurch gekennzeichnet, dass** ferner die Motordrehzahl (n) und/oder die Kraftstoffeinspritzmenge und/oder die Luftmassenströme durch den Motor und/oder die Heizeinrichtung (10) erfasst und zur Steuerung der Luftzufuhr zur Heizeinrichtung (10) berücksichtigt werden.

7. Verfahren nach einem der vorhergehenden Ansprüche, **dadurch gekennzeichnet, dass** der zumindest eine Abgasturbolader (4) der Brennkraftmaschine (1) eine variable Turbinengeometrie aufweist und dass dessen Verstellung als Regelgröße zur Steuerung der Luftzufuhr zur Heizeinrichtung (10) verwertet wird.

8. Vorrichtung zur Durchführung eines Verfahrens zur Anhebung der Abgastemperatur im Abgastrakt einer turboaufgeladenen mehrzylindrigen Brennkraftmaschine (1) nach einem der vorhergehenden Ansprüche mit zumindest einem Abgasturbolader (4), dessen Abgasturbine (5) an den Abgastrakt (6, 7) der Brennkraftmaschine (1) stromauf einer Abgasreinigungseinrichtung (8) angeschlossen ist und dessen Verdichter (3) Ladeluft über eine Ladedruckleitung (2) zu den Brennräumen fördert, sowie mit einer stromauf der Abgasreinigungseinrichtung (8) vorgesehenen Heizeinrichtung (10) zum bedarfsweisen Anheben der Abgastemperatur durch Luftzufuhr aus der Ladedruckleitung (2), wobei die Heizeinrichtung (10) zusätzlich über ein steuerbares Stellelement (15) und eine Abgasleitung (13) an den Abgastrakt (6) der Brennkraftmaschine (1), stromauf der Abgasturbine (5), angeschlossen ist, wobei die Heizeinrichtung (10) zur Zuführung der Luft über eine Zuführleitung (11) an die Ladedruckleitung (2) angeschlossen ist und in der Zuführleitung (11) ein erstes Drosselventil (12) vorgesehen ist, **dadurch gekennzeichnet, dass** in der Abgasleitung (13) zur Heizeinrichtung (10) ein den Massendurchsatz steuerndes Drosselventil (14) vorgesehen ist und dass das abgasseitige Drosselventil (14) in einer AbgasSammelleitung (6a) stromab der Einzelleitung (6b) eines Zylinders der Brennkraftmaschine (1) angeordnet ist, derart, dass lediglich der Zylinder bzw. dessen Abgas oder Reinluft mehr oder weniger vom übrigen, zur Abgasturbine (5) führenden Abgastrakt abtrennbar ist.

9. Vorrichtung nach Anspruch 8, **dadurch gekennzeichnet, dass** der zumindest eine Abgasturbolader (4) eine Abgasturbine (5) mit variabler Turbinengeometrie aufweist und/oder dass die Stellelemente (15) und/oder Drosselventile (12, 14) an ein elektronisches Motorsteuergerät (16) angeschlossen sind, mittels dem nach Maßgabe motorspezifischer Parameter und/oder abgasnachbehandlungsspezifischer Parameter und/oder fahrspezifischer Parameter die Stellelemente (15) und/oder Drosselventile (12, 14) gesteuert sind.

10. Brennkraftmaschine (1) mit einer Vorrichtung nach Ansprüchen 8 oder 9.

11. Kraftfahrzeug mit einer Brennkraftmaschine (1) nach Anspruch 10.

## Claims

1. A method for increasing the exhaust-gas temperature in the exhaust tract of a turbocharged multi-cylinder internal combustion engine (1) having an exhaust-gas purification unit (8) positioned downstream, having a heating device (10) which can be activated when required and which is supplied with air from charge-pressure line (2) of the internal combustion engine (1) in phases in which the charge pressure is high enough that a defined and/or adequate amount of charge air can flow across into the heating device (10), wherein the heating device (10), for the supply of the air, is connected via a feed line (11) to the charge-pressure line (2) and a first throttle value (12) is provided in the feed line (11), wherein the air heated in the heating device (10) is introduced into the exhaust tract upstream of the exhaust-gas purification unit (8), wherein the heating device (10) is supplied with a defined exhaust-gas stream from the exhaust-gas tract of the internal combustion engine (1) at least in operating states of the internal combustion engine in which the charge pressure is not high enough that a defined and/or adequate amount of charge air can flow across into the heating device (10), wherein the exhaust-gas stream is branched off from an exhaust-gas line (13), in which a shut-off value (15) is provided, upstream of the exhaust-gas turbine (5), **characterized in that**, with the first throttle value (12) in the feed line (11) closed, the shut-off value (15) in the exhaust line (13) is opened, and furthermore, a second throttle value (14), which is provided in a collecting line (6a) of an exhaust manifold (6), is activated such that an exhaust-gas quantity from only one cylinder of the internal combustion engine (1) is conducted to the heating device (10) .

2. The method according to Claim 1, **characterized in that** the operating states of the internal combustion engine (1) in which the charge pressure is not high enough that a defined and/or adequate amount of charge air can flow across into the heating device (10) are a low-load and/or idle and/or overrun phase of the internal combustion engine (1).

3. The method according to Claim 1 or 2, **characterized in that** the fuel supply to the cylinder of the internal combustion engine (1) is partially or entirely stopped when the actuation element (15) is activated.

4. The method according to one of the preceding claims, **characterized in that**, as a heating device, use is made of a burner (10) to which fuel is supplied, the fuel supply to said burner being regulated as a function of operating parameters of the internal combustion engine and/or of a lambda probe downstream of the burner (10) and/or of an air mass sensor upstream of the burner (10) and/or the operating parameters of the exhaust-gas aftertreatment system.

5. The method according to one of the preceding claims, **characterized in that** at least the charge pressure and/or the exhaust-gas pressure and/or a pressure difference between the two and/or the lambda value of the exhaust gas downstream of the combustion chambers and/or the lambda value downstream of the heating device (10) of the internal combustion engine (1) is used as a regulating variable for the activation of at least one actuation element (15) and/or of at least one throttle valve (12, 14) for the air supply to the heating device (10).

6. The method according to Claim 5, **characterized in that**, furthermore, the engine rotational speed (n) and/or the fuel injection quantity and/or the air mass flows through the engine and/or the heating device (10) are detected and taken into consideration for the control of the air supply to the heating device (10).

7. The method according to one of the preceding claims, **characterized in that** the at least one exhaust-gas turbocharger (4) of the internal combustion engine (1) has a variable turbine geometry, and **in that** the adjustment thereof is evaluated as a regulating variable for the control of the air supply to the heating device (10).

8. A device for carrying out a method for increasing the exhaust-gas temperature in the exhaust tract of a turbocharged multi-cylinder internal combustion engine (1) according to one of the preceding claims, having at least one exhaust-gas turbocharger (4) whose exhaust-gas turbine (5) is connected to the exhaust tract (6, 7) of the internal combustion engine (1) upstream of an exhaust-gas purification unit (8) and whose compressor (3) delivers charge air via a charge-pressure line (2) to the combustion chambers, and having a heating device (10), which is provided upstream of the exhaust-gas purification unit (8), for increasing the exhaust-gas temperature when required by means of a supply of air from the charge-pressure line (2), wherein the heating device (10) is additionally connected via a controllable actuation element (15) and an exhaust-gas line (13) to the exhaust tract (6) of the internal combustion engine (1), upstream of the exhaust-gas turbine (5), wherein the heating device (10), for the supply of the air, is connected via a feed line (11) to the charge-pressure line (2) and a first throttle valve (12) is provided in the feed line (11), **characterized in that** a throttle valve (14) which controls the mass throughput is provided in the exhaust line (13) to the heating device (10) and **in that** the exhaust-gas-side throttle valve (14) is arranged in an exhaust-gas collecting line (6a) downstream of the individual line (6b) of a cylinder of the internal combustion engine (1), such that only the cylinder, or the exhaust gas or pure air thereof, can be separated to a greater or lesser extent from the rest of the exhaust tract leading to the exhaust-gas turbine (5).

9. The device according to Claim 8, **characterized in that** the at least one exhaust-gas turbocharger (4) has an exhaust-gas turbine (5) with variable turbine geometry, and/or **in that** the actuation elements (15) and/or throttle valves (12, 14) are connected to an electronic engine control unit (16) by means of which the actuation elements (15) and/or throttle valves (12, 14) are controlled as a function of engine-specific parameters and/or exhaust-gas-aftertreatment-specific parameters and/or driving-specific parameters.

10. An internal combustion engine (1), having a device according to Claim 8 or 9.

11. A motor vehicle having an internal combustion engine (1) according to Claim 10.

## Revendications

1. Procédé d'élévation de la température des gaz d'échappement dans la ligne de gaz d'échappement d'un moteur à combustion interne (1) turbochargé à plusieurs cylindres, comprenant un dispositif de purification des gaz d'échappement (8) monté en aval, avec un dispositif de chauffage (10) pouvant être branché au besoin, qui est alimenté en air à partir d'une conduite de pression de suralimentation (2) du moteur à combustion interne (1), dans les phases dans lesquelles la pression de suralimentation est si élevée qu'une quantité définie et/ou suffisante d'air de suralimentation dans le dispositif de chauffage (10) peut être dépassée, le dispositif de chauffage (10), pour l'alimentation en air, étant raccordé par le biais d'une conduite d'alimentation (11) à la conduite de pression de suralimentation (2) et une première soupape d'étranglement (12) étant prévue dans la conduite d'alimentation (11), l'air chauffé dans le dispositif de chauffage (10) étant introduit en amont du dispositif de purification des gaz d'échappement (8) dans la ligne de gaz d'échappement, le dispositif de chauffage (10) étant alimenté avec un flux de gaz d'échappement défini provenant de la ligne de gaz d'échappement du moteur à combustion interne (1) au moins dans les états de fonctionnement du moteur à combustion interne dans lesquels la pression de suralimentation n'est pas élevée au point qu'une quantité définie et/ou suffisante d'air de suralimentation dans le dispositif de chauffage (10) puisse être dépassée, le flux de gaz d'échappement étant prélevé en amont de la turbine à gaz d'échappement (5) depuis une conduite de gaz d'échappement (13) dans laquelle est prévue une soupape d'arrêt (15), **caractérisé en ce que** lorsque la première soupape d'étranglement (12) dans la conduite d'alimentation (11) est fermée, la soupape d'arrêt (15) dans la conduite de gaz d'échappement (13) est ouverte et une deuxième soupape d'étranglement (14) qui est prévue dans une conduite de collecte (6a) d'un collecteur de gaz d'échappement (6) est en outre pilotée de telle sorte qu'une quantité de gaz d'échappement soit guidée depuis seulement un cylindre du moteur à combustion interne (1) vers le dispositif de chauffage (10).

2. Procédé selon la revendication 1, **caractérisé en ce que** les états de fonctionnement du moteur à combustion interne (1) dans lesquels la pression de suralimentation n'est pas élevée au point qu'une quantité définie et/ou suffisante d'air de suralimentation dans le dispositif de chauffage (10) puisse être dépassée, sont une phase à faible charge et/ou une phase de marche à vide et/ou une phase de poussée du moteur à combustion interne (1) .

3. Procédé selon la revendication 1 ou 2, **caractérisé en ce que** l'alimentation en carburant du cylindre du moteur à combustion interne (1) est interrompue partiellement ou complètement lorsque l'élément de réglage (15) est activé.

4. Procédé selon l'une quelconque des revendications précédentes, **caractérisé en ce que** l'on utilise en tant que dispositif de chauffage un brûleur (10) chargé avec du carburant, dont l'alimentation en carburant est réglée en fonction de paramètres de fonctionnement du moteur à combustion interne et/ou d'une sonde lambda en aval du brûleur (10) et/ou d'un débitmètre de masse d'air en amont du brûleur (10) et/ou des paramètres de fonctionnement du système de post-traitement de gaz d'échappement.

5. Procédé selon l'une quelconque des revendications précédentes, **caractérisé en ce que** l'on utilise en tant que grandeur de réglage pour le pilotage d'au moins un élément de réglage (15) et/ou d'au moins une soupape d'étranglement (12, 14) pour l'alimentation en air du dispositif de chauffage (10), au moins la pression de suralimentation et/ou la pression de gaz d'échappement et/ou une différence de pression entre les deux et/ou la valeur lambda du gaz d'échappement en aval des chambres de combustion et/ou la valeur lambda en aval du dispositif de chauffage (10) du moteur à combustion interne (1).

6. Procédé selon la revendication 5, **caractérisé en ce que** l'on détecte en outre le régime du moteur (n) et/ou la quantité d'injection de carburant et/ou les débits massiques d'air à travers le moteur et/ou le dispositif de chauffage (10), et on en tient compte pour commander l'alimentation en air du dispositif de chauffage (10).

7. Procédé selon l'une quelconque des revendications précédentes, **caractérisé en ce que** l'au moins un turbocompresseur à gaz d'échappement (4) du moteur à combustion interne (1) présente une géométrie de turbine variable et **en ce que** son réglage est utilisé en tant que grandeur de réglage pour commander l'alimentation en air du dispositif de chauffage (10).

8. Dispositif pour mettre en œuvre un procédé d'élévation de la température des gaz d'échappement dans la ligne de gaz d'échappement d'un moteur à combustion interne (1) turbochargé à plusieurs cylindres selon l'une quelconque des revendications précéndentes, comprenant au moins un turbocompresseur à gaz d'échappement (4), dont la turbine à gaz d'échappement (5) est raccordée à la ligne de gaz d'échappement (6, 7) du moteur à combustion interne (1) en amont d'un dispositif de purification de gaz d'échappement (8) et dont le compresseur (3) refoule de l'air de suralimentation vers les chambres de combustion par le biais d'une conduite de pression de suralimentation (2), et comprenant également un dispositif de chauffage (10) prévu en amont du dispositif de purification des gaz d'échappement (8), pour élever au besoin la température des gaz d'échappement par l'alimentation en air à partir de la conduite de pression de suralimentation (2), le dispositif de chauffage (10) étant en outre raccordé à la ligne de gaz d'échappement (6) du moteur à combustion interne (1) en amont de la turbine à gaz d'échappement (5) par le biais d'un élément de réglage commandable (15) et d'une conduite de gaz d'échappement (13), le dispositif de chauffage (10), pour l'alimentation en air, étant raccordé à la conduite de pression de suralimentation (2) par le biais d'une conduite d'alimentation (11) et une première soupape d'étranglement (12) étant prévue dans la conduite d'alimentation (11), **caractérisé en ce qu'**une soupape d'étranglement (14) commandant le débit massique est prévue dans la conduite de gaz d'échappement (13) allant au dispositif de chauffage (10) et **en ce que** la soupape d'étranglement (14) du côté des gaz d'échappement est disposée dans une conduite de collecte de gaz d'échappement (6a) en aval de la conduite individuelle (6b) d'un cylindre du moteur à combustion interne (1) de telle sorte que seulement le cylindre ou son gaz d'échappement ou de l'air pur puisse être plus ou moins séparé du reste de la ligne de gaz d'échappement conduisant à la turbine à gaz d'échappement (5).

9. Dispositif selon la revendication 8, **caractérisé en ce que** l'au moins un turbocompresseur à gaz d'échappement (4) présente une turbine à gaz d'échappement (5) avec une géométrie de turbine variable et/ou **en ce que** les éléments de réglage (15) et/ou les soupapes d'étranglement (12, 14) sont raccordés à un appareil de commande électronique du moteur (16) au moyen duquel les éléments de réglage (15) et/ou les soupapes d'étranglement (12, 14) sont commandés en fonction de paramètres spécifiques du moteur et/ou de paramètres spécifiques de post-traitement de gaz d'échappement et/ou de paramètres spécifiques de conduite.

10. Moteur à combustion interne (1) comprenant un dispositif selon la revendication 8 ou 9.

11. Véhicule automobile comprenant un moteur à combustion interne (1) selon la revendication 10.
